# EUROPÄISCHE PATENTSCHRIFT

(11) **EP 3 988 748 B1**
(45) Veröffentlichungstag und Bekanntmachung des Hinweises auf die Patenterteilung: **07.08.2024**
(21) Anmeldenummer: 21194874.0
(22) Anmeldetag: 03.09.2021
(51) Int. Cl.: E05D 3/02, E05D 11/00

(54) **SCHARNIER INSBESONDERE FÜR TÜREN ODER FENSTER**
HINGE, PARTICULARLY FOR DOORS OR WINDOWS
CHARNIÈRE, EN PARTICULIER POUR PORTES OU FENÊTRES

(30) Priorität: 20.10.2020 CH 13502020
(43) Veröffentlichungstag der Anmeldung: 27.04.2022
(73) Patentinhaber: Sitter, Christian, 1545 Chevroux (CH); Sitter, Michel, 1545 Chevroux (CH)
(72) Erfinder: Sitter, Christian, 1545 Chevroux (CH); Sitter, Michel, 1545 Chevroux (CH)
(74) Vertreter: Luchs, Willi

(56) Entgegenhaltungen:
- WO-A1-2014/102704
- CH-A- 273 569
- FR-A1- 2 581 694
- US-B2- 7 610 684

## Beschreibung

Die Erfindung betrifft ein Scharnier insbesondere für Türen oder Fenster nach dem Oberbegriff des Anspruchs 1.

Ein derartiges Scharnier ist in der EP 1 149 976 A1 geoffenbart, bei dem der Scharnierbolzen drehfest im türflügelseitigen Scharnierflügel angeordnet ist und als Betätigungsorgan eines im türseitigen Scharnierflügel eingebauten Drehschalters für eine elektrische Schutz- und/oder Alarmanlage dient, dessen Näherungssensor aktiviert wird, wenn die beiden Scharnierflügel relativ zueinander gedreht werden. Im normalen Betrieb ist der Drehschalter mit dem Näherungssensor am Stromkreis der elektrischen Alarmanlage angeschlossen. Beim Ein-und Ausbau der Tür sind der Sensor und die Alarmanlage im türseitigen Scharnierflügel eingebaut. Dadurch ist die Montage und Demontage der Tür sehr umständlich.

Bei einem Scharnier gemäss der Druckschrift CH 273 569 A ist eine Kontaktvorrichtung in einem Gelenkband bei einem Tür- oder Fensterrahmen vorgesehen, bei dem ein mit einem Drehzapfen versehener Teil mit einem hülsenförmigen Teil mit einem Lappen gelenkig verbunden ist. Im Teil am Türrahmen sind Kabel hindurchgeführt, wobei das Kabel zu einem Kontaktstück in einem isolierenden Körper im Innern des Teils geführt ist. Ein parallel zur Drehachse verlaufender Kontaktstift im Teil wird durch eine Feder an das Kontaktstück bzw. den Körper angedrückt. Im geschlossenen Zustand besteht ein Ruhestromkreis via das Kabel, das Kontaktstück, den Kontaktstift, den Lappen und das Kabel in versenkter Anordnung in der Schiene. Beim Öffnen der Tür oder dem Fenster wird der Stromdurchlass unterbrochen, weil der Kontaktstift durch ein Drehen auf dem isolierenden Körper in Kontakt gelangt.

Bei einem klappbaren Schalter für mobile Schutzbarrieren gemäss der Druckschrift WO 2014/102704 A1 mit Mehrfachsignalisierung von Maschinen ist ein kastenförmiges feststehendes Element vorgesehen, das dazu bestimmt ist, an einem stationären Teil der Barriere befestigt zu werden. Dieses Element ist mit einer Längsachse und einem Paar axialer Endlöcher für die Aufnahme von Stiften versehen, die mit Querarmen eines Elementes verbindbar sind, welches an einem Schwenkteil befestigbar ist. Es sind elektrische Erfassungsmittel innerhalb des kastenartigen Elements vorhanden, die ein Paar von Detektoren aufweisen, die jeweils mit einem stirnseitigen Ende eines jeweiligen Stifts zusammenwirken und dabei einen jeweiligen Schaltwinkel bilden.

In der Druckschrift US 7,610,684 B2 ist ein Verfahren zur Überwachung der Funktionsstellung eines Scharniers mittels eines kontaktlosen, insbesondere mit Hilfe eines Magnetfeldes arbeitenden Sensors offenbart, der einen Drehlagen-Geber und eine über einen Winkelbereich messende Sensoreinheit umfasst. Der Drehlagen-Geber und diese Sensoreinheit weisen eine Nulllagen-Markierung auf, indem der Drehlagen-Geber und die Sensoreinheit mit dem Sensorelement einander mit Abstand gegenüberliegend einerseits mit einem der schwenkenden Teile und andererseits mit einem der feststehenden Teile des Scharniers drehfest gekoppelt werden. Die Sensoreinheit oder der Drehlagen-Geber ist ausserhalb des Scharniers angeordnet.

Der Erfindung liegt die Aufgabe zugrunde, diesen Nachteil zu vermeiden und ein Scharnier der eingangs genannten Art zu schaffen, welches mehrere Auswertungen insbesondere einer Türe oder eines Fenster ermöglicht und konstruktiv so gebaut ist, dass jederzeit eine leichte Montage und Demontage der Tür ohne Abbau des Scharniers möglich ist.

Diese Aufgabe wird erfindungsgemäss durch die Merkmale des Anspruchs 1 gelöst.

Es ist erfindungsgemäss im Scharnier eine Messeinheit integriert, die mit einem Sensor im einen Scharnierflügel und mit einem mit diesem zusammenwirkenden Messwertgeber im andern Scharnierflügel versehen ist. Bei einer Drehung der Scharnierflügel relativ zueinander werden drehwinkelabhängige Signale erzeugt, wobei der Sensor der Messeinheit und ein mit ihm verbundenes elektrisches Kabel in einer Längsbohrung des Scharnierbolzens untergebracht sind.

Auf diese Weise ist sichergestellt, dass bei der Montage und Demontage der Tür nicht erforderlich ist, vorab die Messeinheit abzubauen, weil der Sensor der Messeinheit und ein mit ihm verbundenes elektrisches Kabel im türrahmenseitigen Scharnierflügel und im Türrahmenprofil bzw. in der Wand eingebaut bleiben. Ausserdem ist der Sensor hinter dem Scharnierflügel gut verdeckt und im Türrahmen bzw. in der Wand sicher geschützt, was eine dauerhaft einwandfreie Funktion der Messeinheit insgesamt gewährleistet.

Eine Ausführungsform der Erfindung sieht ausserdem vor, dass der Sensor mit einem im türflügelseitigen Scharnierflügel angeordneten Messwertgeber zusammenwirkt, der in einer Trägerscheibe aus Kunststoffmaterial eingebaut ist und in eine Bohrung einer im türflügelseitigen Scharnierflügel drehfest eingepresste Messinghülse hineinragt, wobei die Bohrung an den Messstellen koaxial zur Längsbohrung des Scharnierbolzens ausgerichtet ist. Durch korrekte Positionierung der Messinghülse ist es damit möglich, den Messwertgeber so zu orientieren, dass seine Messstellen mit bestimmten Drehwinkellagen des Scharnierflügels exakt übereinstimmen.

Um im Betrieb eine stets einwandfreie Funktion des Sensors sicherzustellen, ist die Trägerscheibe des Messwertgebers vorzugsweise stirnseitig mit einer Feder beaufschlagt, die die Aufgabe hat, den Messwertgeber gegen den Scharnierbolzen und den darin eingebauten Sensor anzudrücken, damit beide Bauteile dauerhaft miteinander in Kontakt verbleiben, unabhängig davon, ob sich der Abstand zwischen dem türflügelseitigen Scharnierflügel und dem Scharnierbolzen verändert.

Es ist auch für die einwandfreie Funktion des Scharniers zweckmässig, wenn der Scharnierbolzen in radiale und axiale Lasten aufnehmende Kunststoffhülsen der Scharnierflügel geführt ist, die dem Scharnier ermöglichen, sich genau bei ihrer Drehbewegung auszurichten. Damit ist ein Unterhalt des Scharnierbolzens nicht notwendig.

Der Sensor ist erfindungsgemäss als induktiv arbeitender Sensor ausgebildet, wobei der mit ihm zusammenwirkende Messwertgeber aus einem elektrisch leitenden Material, wie zum Beispiel aus Stahl hergestellt ist.

Zwecks einer möglichst umfassenden Überwachung der Scharnierfunktion ist es im Rahmen einer Ausführungsform der Erfindung vorgesehen, dass die Messeinheit versetzt zur Drehachse des Scharniers angeordnet und der Messwertgeber derart ausgebildet ist, dass er den Sensor in verschiedenen Schwenkpositionen des Scharniers aktiviert.

In diesem Sinne ist es auch zweckmässig, wenn der Sensor nebst der Türbewegung die vom Messwertgeber zurückgelegte Anzahl Öffnungs- und Schliesszyklen registriert.

Für die Verarbeitung und Verwertung der gewonnenen Daten sieht die Erfindung vor, dass der mit dem Sensor zusammenwirkende Signalempfänger die von ihm empfangenen Signale auf einen die Signale verarbeitenden Auswertungseinheit überträgt. Bei der Auswertungseinheit kann es sich um einen Computer, ein Smartphone, ein Tablet oder dergleichen handeln.

Die Erfindung sowie weitere Vorteile derselben sind nachfolgend anhand von Ausführungsbeispielen unter Bezugnahme auf die Zeichnung näher erläutert. Es zeigen:
- Fig. 1: einen Längsschnitt einer Ausführungsform eines erfindungsgemässen Scharniers mit einer Messeinheit;
- Fig. 2: einen Längsschnitt des Scharniers nach Fig. 1 beim Demontieren des Fensters bzw. der Tür; und
- Fig. 3: eine Draufsicht auf das Scharnier gemäss Fig. 1 mit um 90° verschwenkten Scharnierflügeln.

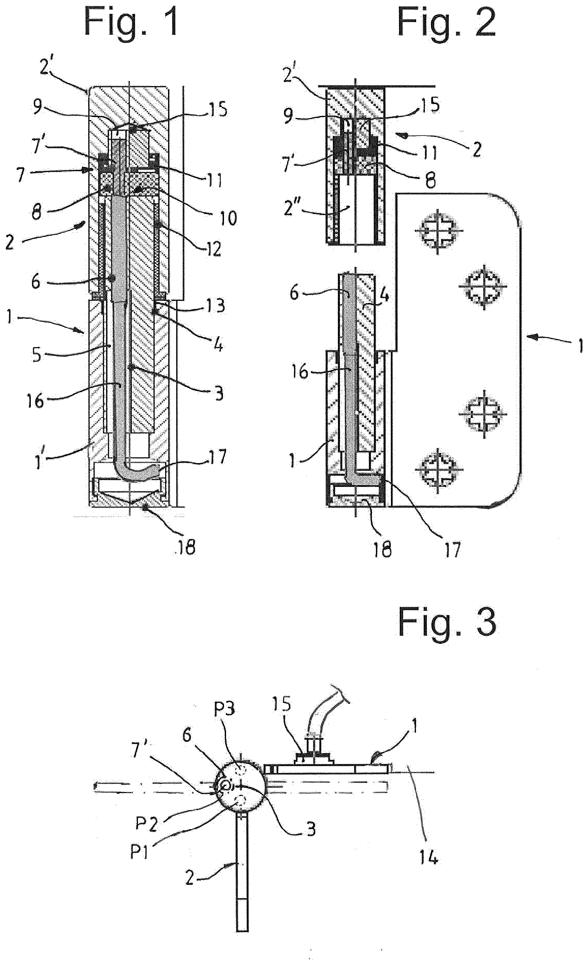

Das in Fig. 1 und Fig. 2 gezeigte Scharnier mit wenigstens zwei Scharnierflügeln 1, 2 eignet sich zum schwenkbaren Befestigen einer Tür, eines Fensters an einem jeweiligen Rahmen oder dergleichen, welches sehr vorteilhaft für Anwendungen im Sicherheitsbereich oder in Gebäuden mit Überwachungssystemen eingesetzt werden kann.

Das Scharnier besteht im Wesentlichen aus einer rahmen- und einer flügelseitigen Scharnierhülse 1', 2', die relativ zueinander um eine Drehachse 3 eines sie miteinander verbindenden Scharnierbolzens 4 drehbar gelagert sind, wobei dieser vorteilhaft in der rahmenseitigen Scharnierhülse 1' drehfest eingepresst ist, und die Scharnierhülse 2' mit der Türe oder dem Fenster mit einer Sacklochbohrung 2" auf diesen Scharnierbolzen 4 aufsteckbar ist.

Erfindungsgemäss ist im Scharnier eine Messeinheit 10 mit einem Sensor 6 im einen Scharnierflügel 1 und mit einem mit diesem zusammenwirkenden Messwertgeber 7 im andern Scharnierflügel 2 integriert, wobei der Sensor 6 der Messeinheit 10 und ein mit ihm verbundenes elektrisches Kabel 16 in einer Längsbohrung 5 des Scharnierbolzens 4 angeordnet sind.

Mit dieser Messeinheit 10 können bei einer Drehung des einen Scharnierflügels 1, 2 relativ zum andern drehwinkelabhängige Signale erzeugt werden, die zu einer Auswertungseinheit übertragbar sind.

Der Messwertgeber 7 ist zweckmässigerweise in der türflügelseitigen Scharnierhülse 2' in einer Trägerscheibe 8 aus Kunststoffmaterial in der Sacklochbohrung 2" eingebaut und er ragt dabei in eine jeweilige Bohrung 9 einer darin drehfest eingepressten Hülse 15. Letztere dient als Orientierungshülse für den Messwertgeber 7, die ermöglicht, diesen drehwinkelmässig so auszurichten, dass er genau der Drehbewegung der Scharnierflügel relativ zueinander folgen kann. Die Bohrungen 9 sind an den Messstellen koaxial zur Längsbohrung 5 des Scharnierbolzens 4 ausgerichtet und es ist jeweils ein metallischer Bolzen 7' darin gehalten, welche die Messpositionen P1, P2 und P3 für den Sensor 6 bilden.

Die Trägerscheibe 8 des Messwertgebers 7 ist stirnseitig mit einer Druckfeder 11 beaufschlagt, durch welche dieser gegen den Scharnierbolzen 2 und den Sensor 6 angedrückt wird. Damit bleibt er mit dem Sensor 6 ständig in Kontakt, unabhängig davon, dass im Laufe des Betriebs etwaige Abweichungen des Abstandes zwischen dem türseitigen Scharnierflügel 2 und dem Scharnierbolzen 3 auftreten können.

Zwecks einer präzisen Arbeitsweise ist der Sensor 6 als induktiv arbeitender Sensor ausgebildet, wobei der mit ihm zusammenwirkende Messwertgeber 7 aus einem elektrisch leitenden Material, zum Beispiel Stahl, hergestellt ist. Es ist auch hierfür zweckmässig, wenn der Scharnierbolzen 4 in radiale und axiale Lasten aufnehmende Kunststoffhülsen 12, 13 der Scharnierflügel geführt ist.

Der Sensor 6 wird vorzugsweise zumindest bei Scharnierdrehwinkeln aktiviert, wenn die Scharnierflügel 1, 2 zueinander einen Winkel von 90° in der gezeigten Messposition P2 aufweisen, bei der sich die Stirnseite eines Bolzens 7' mit dem angedeuteten stationären Sensor 6 überdeckt. In der Messposition P1 sind das Scharnier und damit die Türe offen bei 180° und in der Messposition P3 sind sie bei einem Winkel 0° voll geschlossen. Somit ist es jederzeit möglich, die verschiedenen Schwenkpositionen der Tür festzustellen, mitunter ob die Tür geschlossen oder offen ist. Durch die vom Sensor 6 an die Auswertungseinheit übertragenen Signale kann zudem auch die zurückgelegte Anzahl Arbeitszyklen des Scharniers erfasst werden. Daraus lässt sich zusätzlich der Abnutzungstand des Scharniers ableiten und, davon abhängig, ob eine Revision oder ein Austausch des Scharniers fällig ist.

Die vom Sensor 6 erzeugten Signale werden durch das Kabel 16 zu einem auf die Rückseite des türrahmenseitigen Scharnierflügels 1 im Türrahmenprofil oder in der Wand befestigbaren Signalempfänger 15 geführt. Dieses Kabel 16 ist durch die Längsbohrung 5 des Scharnierbolzens 4 und einen an dessen unterem Ende anschliessenden Ausgangskanal 17 geführt. Die Scharnierhülse 1' ist an ihrem unteren Ende mit einem abnehmbaren Deckel 18 verschlossen, der abnehmbar ist und damit ermöglicht wird, dass das Kabel 16 leicht in den Ausgangskanal 17 geführt bzw. aus diesem herausgenommen werden kann. Dieser schützt auch das Kabel 16 auf der Rückseite des Scharnierflügels 1 im Türrahmenprofil 14, in dem der Signalempfänger 15 eingebaut ist.

Der Signalempfänger 15 überträgt die vom Sensor 6 gesendeten Signale zu einer elektronischen Auswerteeinheit eines Computers, einem Smartphone, Tablet, Lap Top oder ähnlichem, in der sie identifiziert und verarbeitet werden, wobei zusätzlich die Anzahl zurückgelegter Arbeitszyklen ermittelt werden kann. Die Daten können auch in ein Netzwerk geleitet und/oder in ein Überwachungssystem eingespiesen und durch dieses genutzt werden.

Üblicherweise werden insbesondere bei Türen aber auch bei Fenstern jeweils zwei oder drei Scharniere verwendet, um eine ausreichende stabile Halterung derselben zu ermöglichen. Es ist dabei genügend, wenn ein Scharnier nach der Erfindung und das oder die anderen für eine Türe als übliche Scharniere montiert werden. In beiden Fällen bietet die Erfindung den Vorteil, dass damit eine leichte Montage bzw. Demontage einer Tür oder einem Fenster möglich ist, da der Sensor 6 und der Signalempfänger 15 immer stationär im türrahmenseitigen Scharnierflügel 1 bzw. im Türrahmenprofil 14 eingebaut sind. Die Türe kann wie oben erwähnt aus dem Scharnierflügel am Rahmen ohne Zusatzmanipulationen herausgehoben bzw. aufgesteckt werden.

Die Erfindung ist mit den obigen Ausführungsbeispielen ausreichend erläutert. Sie könnte aber selbstverständlich noch durch andere Varianten dargetan sein. So könnte theoretisch auch eine umgekehrte Anordnung vorgesehen sein, bei dem der Sensor und die Kabelführung im schwenkbaren Scharnier und der Messwertgeber im festen Scharnier angeordnet sein könnte, dies wenn zum Beispiel in einer Türe oder einem Fenster eine Signalauswertung durch einen Alarmgeber oder dergleichen mittels eines Displays oder so ähnlich ermöglicht werden soll.

Die Scharnierhülse mit dem integrierten Messwertgeber ist mit einer durchgehenden Bohrung ausgebildet und endseitig auf der gegenüberliegenden Seite des hineingesteckten Scharnierbolzens mit einem Deckel versehen.

## Patentansprüche

1. Scharnier insbesondere für Türen oder Fenster, mit Scharnierflügeln (1, 2), die relativ zueinander um eine Drehachse (3) eines sie miteinander verbindenden Scharnierbolzens (4) drehbar sind, wobei im Scharnier eine Messeinheit (10) mit einem Sensor (6) im einen Scharnierflügel (1) und mit einem mit diesem zusammenwirkenden Messwertgeber (7) im andern Scharnierflügel (2) integriert ist, die bei einer Drehung der Scharnierflügel (1, 2) relativ zueinander drehwinkelabhängige Signale erzeugt, **dadurch gekennzeichnet, dass**
der Sensor (6) der Messeinheit (10) und ein mit ihm verbundenes elektrisches Kabel (16) in einer Längsbohrung (5) des Scharnierbolzens (4) angeordnet sind, während der Messwertgeber (7) der Messeinheit (10) im schwenkbaren Scharnierflügel (2) in einer den Scharnierbolzen (4) aufnehmenden Sacklochbohrung (2') montiert ist, wobei der Sensor (6) die von der Messeinheit (10) erzeugten drehwinkelabhängigen Signale durch das elektrische Kabel (16) überträgt, wobei die Messeinheit (10) durch einen induktiv wirkenden Sensor (6) ausgelegt und der mit ihm zusammenwirkende Messwertgeber (7) aus einem elektrisch leitenden Material hergestellt ist, wobei der Scharnierbolzen (4) in der rahmenseitigen Scharnierhülse (1') des Scharnierflügels (1) befestigt ist und das elektrische Kabel (16) aus der Scharnierhülse (1') herausragt, wobei die Scharnierhülse (1') unterhalb des Scharnierbolzens (4) am unteren Ende mit einem abnehmbaren Deckel (18) verschlossen ist.

2. Scharnier nach Anspruch 1, **dadurch gekennzeichnet, dass**
die Messeinheit (10) versetzt zur Drehachse (3) des Scharniers angeordnet und der Messwertgeber (7) derart ausgebildet ist, dass er den Sensor (6) in verschiedenen Messpositionen (P1, P2, P3) aktiviert.

3. Scharnier nach Anspruch 1 oder 2, **dadurch gekennzeichnet, dass** der Messwertgeber (7) eine Trägerscheibe (8) aus einem nicht leitenden Kunststoffmaterial mit mehreren metallischen Bolzen (7') umfasst, wobei die Trägerscheibe (8) stirnseitig mit einer Feder (11) derart beaufschlagt ist, dass der Messwertgeber (7) gegen den Sensor (6) für einen stetigen Kontakt angedrückt ist.

4. Scharnier nach einem der Ansprüche 1 bis 3, **dadurch gekennzeichnet, dass**
das durch die Längsbohrung (5) des Scharnierbolzens (4) geführte elektrische Kabel (16) am unteren Ende bei der Scharnierhülse (1') durch einen Ausgangskanal (17) zu einem Signalempfänger (15) geleitet ist.

5. Scharnier nach einem der Ansprüche 1 bis 4, **dadurch gekennzeichnet, dass**
der Scharnierbolzen (4) in axiale und radiale Lasten aufnehmenden Kunststoffhülsen (12, 13) in der ihn drehbar lagernden Scharnierhülse (2') geführt ist.

6. Scharnier nach einem der Ansprüche 1 bis 5, **dadurch gekennzeichnet, dass**
die vom Sensor (6) gesendeten Signale von einer elektronischen Auswerteeinheit eines Computers, eines Smartphone, Tablet, Lap Top oder ähnlichem erfassbar und auswertbar sind.

7. Scharnier nach Anspruch 6, **dadurch gekennzeichnet, dass**
mittels den gesendeten Signalen die Anzahl der Arbeitszyklen des Scharniers ermittelbar sind.

8. Scharnier nach Anspruch 6 oder 7, **dadurch gekennzeichnet, dass** die Signale in ein Netzwerk und/oder in ein Überwachungssystem übertragbar sind.

## Claims

1. Hinge, in particular for doors or windows, having hinge leaves (1, 2) which are rotatable relative to one another about an axis of rotation (3) of a hinge pin (4) connecting them to one another, wherein a measuring unit (10) is integrated in the hinge with a sensor (6) in one hinge leaf (1) and with a measured value transmitter (7) interacting with the latter in the other hinge leaf (2), which generates signals dependent on the angle of rotation when the hinge leaves (1, 2) rotate relative to one another, **characterised in that**
the sensor (6) of the measuring unit (10) and an electrical cable (16) connected to it are arranged in a longitudinal bore (5) of the hinge pin (4), while the measuring transmitter (7) of the measuring unit (10) is mounted in the pivotable hinge leaf (2) in a blind bore (2') receiving the hinge pin (4), wherein the sensor (6) transmitting the rotation angle dependent signals generated by the measuring unit (10) through the electrical cable (16), wherein the measuring unit (10) is designed with an inductive sensor (6) and the transmitter (7) cooperating with it is made of an electrically conductive material, wherein the hinge pin (4) is fastened in the frame-side hinge sleeve (1') of the hinge leaf (1) and the electrical cable (16) protrudes from the hinge sleeve (1'), wherein the hinge sleeve (1') is closed below the hinge pin (4) at the lower end with a removable cover (18).

2. Hinge according to claim 1, **characterised in that**
the measuring unit (10) is arranged offset to the axis of rotation (3) of the hinge and the measured value transmitter (7) is designed in such a way that it activates the sensor (6) in different measuring positions (P1, P2, P3).

3. Hinge according to claim 1 or 2, **characterised in that**
the transmitter (7) comprises a carrier disc (8) made of a non-conductive plastic material with a plurality of metallic bolts (7'), wherein the carrier disc (8) is acted upon on the end face by a spring (11) in such a way that the transmitter (7) is pressed against the sensor (6) for a continuous contact.

4. Hinge according to any one of claims 1 to 3, **characterised in that**
the electrical cable (16) guided through the longitudinal bore (5) of the hinge pin (4) is guided at the lower end near the hinge sleeve (1') through an output channel (17) to a signal receiver (15).

5. Hinge according to any one of claims 1 to 4, **characterised in that**
the hinge pin (4) is guided in plastic sleeves (12, 13), which absorb axial and radial loads in the hinge sleeve (2') which rotatably supports it.

6. Hinge according to any one of claims 1 to 5, **characterised in that**
the signals transmitted by the sensor (6) can be detected and analysed by an electronic evaluation unit of a computer, a smartphone, tablet, lap top or the like.

7. Hinge according to claim 6, **characterised in that**
the number of operating cycles of the hinge can be determined by means of the transmitted signals.

8. Hinge according to claim 6 or 7, **characterised in that**
the signals can be transmitted to a network and/or a monitoring system.

## Revendications

1. Charnière, en particulier pour portes ou fenêtres, comprenant des lames (1, 2) de charnière, qui peuvent tourner relativement l'une par rapport à l'autre autour d'un axe (3) de rotation d'une broche (4) de charnière les reliant entre elles, dans laquelle il est intégré dans la charnière une unité (10) de mesure comprenant un capteur (6) dans l'une des lames (1) de la charnière et comprenant un donneur (7) de valeurs de mesure coopérant avec celui-ci dans l'autre lame (2) de la charnière, qui produit, lors d'une rotation des lames (1, 2) de la charnière l'une par rapport à l'autre, des signaux en fonction de l'angle de rotation, **caractérisée en ce que**
le capteur (6) de l'unité (10) de mesure et un câble (16) électrique relié à lui sont disposés dans un trou (5) longitudinal de la broche (4) de la charnière, tandis que le donneur (7) de valeurs de mesure de l'unité (10) de mesure est monté dans la lame (2) de charnière pivotante dans un trou (2') borgne recevant la broche (4) de la charnière, dans lequel le capteur (6) transmet par le câble (16) électrique les signaux en fonction de l'angle de rotation produits par l'unité (10) de mesure, dans laquelle l'unité (10) de mesure est réalisée par un capteur (6) à effet inductif et le donneur (7) de valeurs de mesure, coopérant avec lui, est en un matériau conducteur de l'électricité, dans laquelle la broche (4) de la charnière est fixée dans le manchon (1') de la charnière, du côté du cadre, de la lame (1) de la charnière et le câble (16) électrique fait saillie du manchon (1') de la charnière, dans laquelle le manchon (1') de la charnière est, en-dessous de la broche (4) de la charnière, fermé à l'extrémité inférieure par un couvercle (18), qui peut être retiré.

2. Charnière suivant la revendication 1, **caractérisée en ce que**
l'unité (10) de mesure est montée de manière décalée par rapport à l'axe (3) de rotation de la charnière et le donneur (7) de valeurs de mesure est constitué de manière à activer le capteur (6) dans des positions (P1, P2, P3) de mesure différentes.

3. Charnière suivant la revendication 1 ou 2, **caractérisée en ce que**
le donneur (7) de valeurs de mesure comprend un disque (8) support en une matière plastique non conductrice ayant plusieurs chevilles (7') métalliques, dans lequel le disque (8) de support est soumis du côté frontal à l'effet d'un ressort (11), de manière à pousser, pour un contact constant, le donneur (7) de valeurs de mesure sur le capteur (6).

4. Charnière suivant l'une des revendications 1 à 3, **caractérisée en ce que**
le câble (16) électrique passant dans le trou (5) longitudinal de la broche (4) de la charnière est, au manchon (1') de la charnière à l'extrémité inférieure, conduit par un conduit (17) de sortie à un récepteur (15) de signal.

5. Charnière suivant l'une des revendications 1 à 4, **caractérisée en ce que**
la broche (4) de la charnière passe dans des charnons (12, 13) en matière plastique, absorbant des charges axiales et radiales dans le manchon (2') de la charnière et la montant à rotation.

6. Charnière suivant l'une des revendications 1 à 5, **caractérisée en ce que**
les signaux envoyés par le capteur (6) peuvent être détectés et exploités par une unité électronique d'exploitation d'un ordinateur, d'un téléphone intelligent, d'une tablette, d'un lap top ou analogue.

7. Charnière suivant la revendication 6, **caractérisée en ce qu'**
au moyen des signaux envoyés, le nombre des cycles de travail de la charnière peut être déterminé.

8. Charnière suivant la revendication 6 ou 7, **caractérisée en ce que**
les signaux peuvent être transmis dans un réseau et/ou dans un système de contrôle.
